# EUROPEAN PATENT APPLICATION

(11) **EP 4 535 520 A1**
(43) Date of publication of application: **09.04.2025**
(21) Application number: 22949803.5
(22) Date of filing: 06.07.2022
(51) Int. Cl.: H01M 50/109

(54) **BUTTON CELL AND ELECTRONIC DEVICE**

(71) Applicant: Ningde Amperex Technology Limited, Ningde, Fujian 352100 (CN)
(72) Inventor: LENG, Qianyi, Ningde, Fujian 352100 (CN); YANG, Hongzhan, Ningde, Fujian 352100 (CN); ZENG, Qiao, Ningde, Fujian 352100 (CN); GE, Tong, Ningde, Fujian 352100 (CN)
(74) Representative: Klunker IP Patentanwälte PartG mbB
(86) International application number: PCT/CN2022/104211
(87) International publication number: WO 2024/007217

(57) **Abstract**

This application relates to the field of battery technology, and discloses a button cell and an electronic device. The button cell includes an electrode assembly, a first tab, and a second tab. A first current collector of the first electrode plate includes a first starting edge and a first ending edge; and the second electrode plate includes a second current collector. Viewed from a first direction, a line passing through the first starting edge and a central axis of the electrode assembly is a first virtual line, a line passing through the central axis and perpendicular to the first virtual line is a second virtual line, and the first and second virtual lines divide the electrode assembly into a first region to a fourth region. A first connection segment of the first tab has a first centerline; a second connection segment of the second tab has a second centerline; viewed from the first direction, a line connecting the first centerline and the central axis is a third virtual line, and a line connecting the second centerline and the central axis is a fourth virtual line; and the third and fourth virtual lines are not simultaneously located in the same one of the first to the fourth regions, and a smaller included angle formed between the third and fourth virtual lines is α₁, where 90°≤α₁≤180°. Such arrangement improves cycling performance.

## Description

### TECHNICAL FIELD

This application relates to the field of energy storage technology, particularly to a button cell and an electronic device.

### BACKGROUND

A button cell is a device that converts external energy into electrical energy and stores it internally, to power external devices (such as portable electronic devices) when needed. Generally, a button cell includes a housing, an electrode assembly accommodated in the housing, and tabs. The electrode assembly includes a first electrode plate, a second electrode plate, and a separator. The first electrode plate and the second electrode plate have opposite polarities, and a separator is disposed between them for separation. The electrode assembly is wound in a spiral shape to be accommodated in a cylindrical housing.

### SUMMARY

During the implementation of this application, the inventors of this application have discovered that: when viewed along the central axis of the wound electrode assembly in a button cell, the dimensions from the central axis to various edges of the electrode assembly are uneven, resulting in uneven pressures on different parts of the electrode assembly during manufacturing and use. This leads to poor interfaces between the first electrode plate and the second electrode plate, resulting in a relatively low capacity retention rate after a preset number of charge and discharge cycles, and affecting the service life of the button cell.

This application is intended to provide a button cell and an electronic device to improve the uneven dimensions of the electrode assembly in the button cell and enhance the service life.

The following technical solutions are used in this application to resolve the technical problems.

A button cell includes an electrode assembly, a first tab, and a second tab. The electrode assembly includes a first electrode plate and a second electrode plate, the first electrode plate and the second electrode plate are stacked and wound in a spiral shape around a central axis, the extending direction of the central axis is a first direction, and the first direction is perpendicular to a winding direction. The first electrode plate includes a first current collector, and the first current collector includes a first starting edge and a first ending edge arranged opposite to each other in the winding direction; and the second electrode plate includes a second current collector. Viewed from the first direction, a line passing through the first starting edge and the central axis is defined as a first virtual line, a line passing through the central axis and perpendicular to the first virtual line is defined as a second virtual line, and the first virtual line and the second virtual line divide the electrode assembly into a first region, a second region, a third region, and a fourth region that are sequentially connected from the first starting edge along the winding direction. The first tab includes a first connection segment extending along the first direction and connected to the first current collector, and the first connection segment has a first centerline extending along the first direction; the second tab includes a second connection segment extending along the first direction and connected to the second current collector, and the second connection segment has a second centerline extending along the first direction; viewed from the first direction, a line connecting the first centerline and the central axis is defined as a third virtual line, and a line connecting the second centerline and the central axis is defined as a fourth virtual line; and the third virtual line and the fourth virtual line are not simultaneously located in the same one of the first region, the second region, the third region, and the fourth region, and a smaller included angle formed between the third virtual line and the fourth virtual line is α₁, where 90°≤α₁≤180°.

In the case of 90°≤α1≤180°, the third virtual line and the fourth virtual line are not simultaneously located in one of the first region, the second region, the third region, and the fourth region, and there is an optimal distance between the first tab and the second tab. This can alleviate the uneven dimensions of the electrode assembly connected to the first tab and the second tab to some extent, significantly improving the cycling capacity retention rate of the button cell and extending its service life.

In some embodiments, viewed from the first direction, a ray using the central axis as an endpoint and passing through the first starting edge is defined as a first virtual ray, and at least one of the first connection segment or the second connection segment is spaced from the first virtual ray.

If the first connection segment and the second connection segment both intersect with the first virtual ray, the arrangement of the first tab and the second tab causes compressive stress on the electrode assembly at this position, and this force is transmitted along the radial direction of the electrode assembly to the head of the first electrode plate, which in turn causes the first active material layer near the first starting edge to fall off. The arrangement that neither the first connection segment nor the second connection segment intersect with the first virtual ray can better reduce the above risk. It can be understood that in other embodiments of this application, only one of the first connection segment or the second connection segment may be spaced from the first virtual ray. As long as at least one of the first connection segment or the second connection segment is spaced from the first virtual line, the above risk can also be reduced to some extent.

In some embodiments, the third virtual line is located in the fourth region, and the fourth virtual line is located in the second region. This arrangement makes the third virtual line and the fourth virtual line located in opposite regions and not in the same region as the first virtual ray, with a relatively large distance between them, which helps to improve the overall flatness of the button cell.

In some embodiments, the first electrode plate is a cathode electrode plate, and the second electrode plate is an anode electrode plate.

In some embodiments, the second current collector includes a second starting edge and a second ending edge arranged opposite to each other in the winding direction. Viewed from the first direction, a ray using the central axis as an endpoint and passing through the first starting edge is defined as a first virtual ray, a ray using the central axis as an endpoint and passing through the second starting edge is defined as a fifth virtual line, and an included angle between the fifth virtual line and the first virtual ray along the winding direction is α₂, where 90°≤α₂≤180°.

In the case of α₂<90°, it is difficult to wind the electrode assembly using a winding mandrel, there is lithium precipitation at the head of the second electrode plate, and the cycling capacity retention rate of the button cell is relatively low. In the case of 90°≤α₂≤180°, it is easy to wind the electrode assembly using a winding mandrel, the risk of lithium precipitation at the head of the second electrode plate is relatively low, and the cycling capacity retention rate of the button cell is relatively high.

In some embodiments, one of the first tab and the second tab is disposed in a fifth region. The fifth region is a region between the fifth virtual line and the first virtual ray, and along the winding direction, the fifth virtual line, the fifth region, and the first virtual ray are arranged in sequence.

Since no first arcuate portion is disposed between the two innermost second arcuate portions, arranging the first tab or the second tab in the fifth region is conducive to balancing the overall size of the electrode assembly.

In some embodiments, the second current collector includes a second starting edge and a second ending edge arranged opposite to each other in the winding direction. Viewed from the first direction, a ray using the central axis as an endpoint and passing through the first ending edge is defined as a sixth virtual line, a ray using the central axis as an endpoint and passing through the second ending edge is defined as a seventh virtual line, and an included angle between the sixth virtual line and the seventh virtual line along the winding direction is α₃, where 90°≤α₃≤180°.

With this arrangement, the first ending edge and the second ending edge are not located in the same region, which helps to alleviate the influence of the terminating ends of the first current collector and the second current collector on the overall flatness of the button cell, and also helps to reduce the impact of the cycling swelling of one of the electrode plates on the reliability of the terminating end of the button cell caused by the first ending edge and the second ending edge being too close to each other.

In some embodiments, one of the first tab and the second tab is disposed in a sixth region. The sixth region is a region between the sixth virtual line and the seventh virtual line, and along the winding direction, the sixth virtual line, the sixth region, and the seventh virtual line are arranged in sequence.

Since no third arcuate portion is disposed between the two outermost fourth arcuate portions, arranging the first tab or the second tab in the sixth region is conducive to balancing the overall thickness of the electrode assembly.

In some embodiments, the sixth virtual line is located in the first region, and the seventh virtual line is located in the third region.

In some embodiments, the second current collector includes a second starting edge and a second ending edge arranged opposite to each other in the winding direction. Viewed from the first direction, a ray using the central axis as an endpoint and passing through the second starting edge is defined as a fifth virtual line, and at least one of a first connection portion or a second connection portion is spaced from the fifth virtual line. Such arrangement can reduce the risk of poor interface at the position corresponding to the fifth virtual line caused by the coincidence of the first connection portion or the second connection portion with the fifth virtual line.

In some embodiments, viewed from the first direction, a ray using the central axis as an endpoint and passing through the first starting edge is defined as a first virtual ray, a ray using the central axis as an endpoint and passing through the first ending edge is defined as a sixth virtual line, and a smaller included angle formed between the sixth virtual line and the first virtual ray is α₄, where 0°≤α₄≤30°.

With this arrangement, the positions of the first starting edge and the first ending edge can be matched, the flatness of the button cell can be balanced, and the first current collector is not excessively large, thereby reducing the costs.

In some embodiments, the first ending edge is located in the first region. This helps to form the compression of the first ending edge against the first starting edge, which is beneficial to improve the flatness of the button cell.

In some embodiments, the second current collector includes a second starting edge and a second ending edge arranged opposite to each other in the winding direction. Viewed from the first direction, a line connecting the second starting edge and the central axis is defined as a fifth virtual line, a line connecting the second ending edge and the central axis is defined as a seventh virtual line, and a smaller included angle formed between the fifth virtual line and the seventh virtual line is α₅, where 0°≤α₅≤30°.

With this arrangement, the positions of the second starting edge and the second ending edge can be matched, the flatness of the button cell can be balanced, and the second current collector is not excessively large, thereby reducing the costs.

In some embodiments, the first current collector includes a first uncoated foil segment and a second uncoated foil segment, the first starting edge is configured as an edge of the first uncoated foil segment, the first ending edge is configured as an edge of the second uncoated foil segment, and the first connection segment is connected to the second uncoated foil segment. The arrangement of the first uncoated foil segment is beneficial for clamping the first current collector, facilitating the inner-turn winding of the button cell. The arrangement of the second uncoated foil segment is beneficial for connecting the first connection segment, reducing the influence of the first connection on the flatness of the button cell.

In some embodiments, the second current collector includes a second starting edge and a second ending edge arranged opposite to each other in the winding direction, the second current collector includes a third uncoated foil segment and a fourth uncoated foil segment, the second starting edge is configured as an edge of the third uncoated foil segment, the second ending edge is configured as an edge of the fourth uncoated foil segment, and the second connection segment is connected to the fourth uncoated foil segment. The arrangement of the third uncoated foil segment is beneficial for clamping the second current collector, facilitating the inner-turn winding of the button cell. The arrangement of the fourth uncoated foil segment is beneficial for connecting the second connection segment, reducing the influence of the second connection on the flatness of the button cell.

In some embodiments, the electrode assembly includes a separator separating the first electrode plate and the second electrode plate.

In some embodiments, a thickness of the first tab is 20 µm to 100 µm, and a thickness of the second tab is 20 µm to 100 µm. This helps to balance the current flow requirements of the first tab and the second tab, as well as the influence on the flatness of the button cell.

The following technical solution is also used in this application to resolve the technical problems.

An electronic device is provided, including the foregoing button cell. Since the electronic device includes the foregoing button cell, the electronic device can also improve the cycling capacity retention rate and service life of the button cell.

### BRIEF DESCRIPTION OF DRAWINGS

To describe the technical solutions in some embodiments of this application more clearly, the following briefly describes the accompanying drawings required for describing some embodiments. Apparently, the accompanying drawings in the following descriptions show only some embodiments of this application, and persons of ordinary skill in the art may still derive others drawings from structures shown in these accompanying drawings.
FIG. 1 is a schematic diagram of a button cell according to an embodiment of this application;
FIG. 1B is a schematic cross-sectional view of the button cell along M-M shown in FIG. 1;
FIG. 2 is a schematic diagram of an electrode assembly of the button cell in FIG. 1 when viewed along a first direction;
FIG. 3 is a schematic diagram after the separator in FIG. 2 is hidden;
FIG. 4 is a schematic diagram of the first electrode plate in FIG. 2 in a flattened state;
FIG. 5 is a top view of FIG. 4;
FIG. 6 is a schematic diagram of a second electrode plate in a flattened state;
FIG. 7 is a top view of FIG. 6; and
FIG. 8 is a schematic diagram of an electronic device according to an embodiment of this application.

### DETAILED DESCRIPTION

For ease of understanding this application, the following makes a more detailed description of this application with reference to the accompanying drawings and specific embodiments. It should be noted that when an element is expressed as being "fastened/fixed" to another element, it may be directly fastened/fixed to the another element or one or more intermediate elements may be present. When an element is expressed as being "connected" to another element, it may be directly connected to the another element or one or more intermediate elements may be present. The terms "vertical", "horizontal", "left", "right", "inside", "outside", and similar expressions used in this specification are merely for description purposes.

Unless otherwise defined, all technical and scientific terms used herein shall have the same meanings as commonly understood by persons skilled in the art to which this application belongs. The terms used in the specification of this application are for description of specific embodiments only without any intention to limit this application. The term "and/or" used herein includes any and all combinations of one or more associated items listed.

In addition, technical features involved in different embodiments of this application that are described below may be combined as long as they do not conflict with each other.

In this specification, "mounting" includes fixing or limiting an element or apparatus to a specific position or place by welding, screwing, clamping, bonding, or the like. The element or apparatus may stay still at the specific position or place, or may move within a limited range. After being fixed or limited to the specific position or place, the element or apparatus can be disassembled or cannot be disassembled. This is not limited in some embodiments of this application.

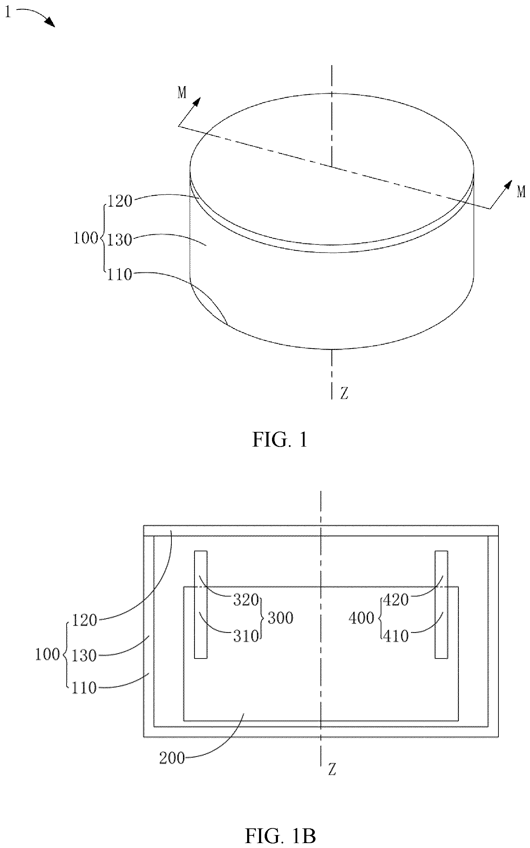

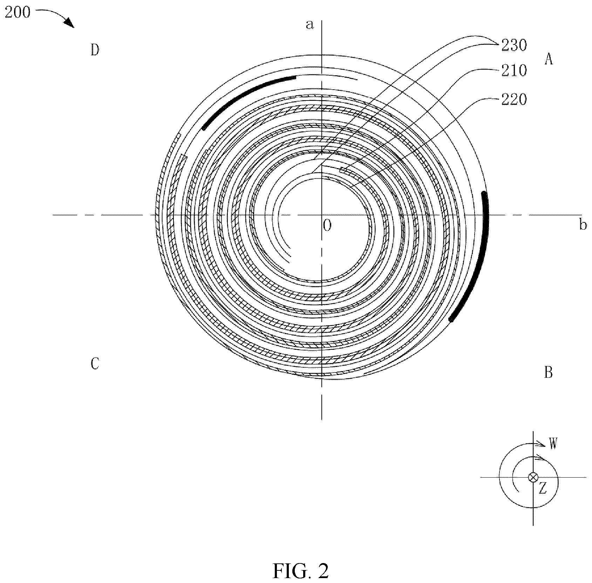

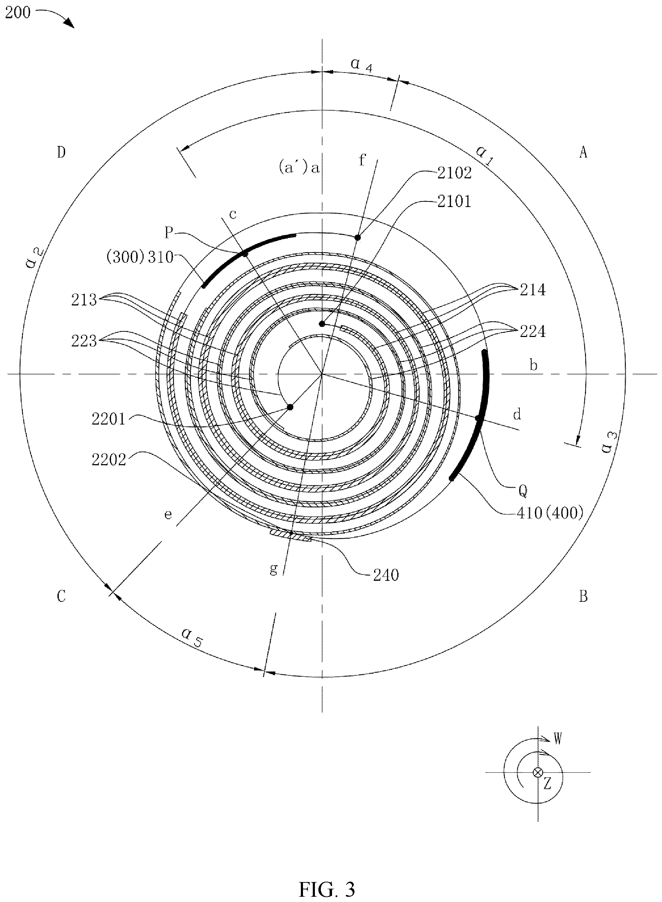

Referring to FIGs. 1 to 3, FIG. 1 is a schematic diagram of a button cell 1 according to an embodiment of this application, FIG. 1B is a schematic cross-sectional view of a button cell along M-M, FIG. 2 is a schematic diagram of an electrode assembly 200 when viewed along a first direction Z, and FIG. 3 is a schematic diagram after the separator in FIG. 2 is hidden. The button cell 1 includes an electrode assembly 200, a first tab 300, and a second tab 400. The electrode assembly 200 is a core component of the button cell 1 for implementing charge and discharge. The first tab 300 is connected to the electrode assembly 200 to form one electrode of the button cell 1; and the second tab 400 is connected to the electrode assembly 200 to form the other electrode of the button cell 1. In addition, the button cell 1 further includes a housing 100, which is used to accommodate the above-mentioned electrode assembly 200, the first tab 300, the second tab 400, and an electrolyte. For better understanding of the button cell 1, the specific structures of the housing 100, the electrode assembly 200, the first tab 300, and the second tab 400 are described below in order.

For the housing 100, refer to FIG. 1, which is a mounting base and container for the remaining components in the button cell 1. In this embodiment, the housing 100 is cylindrical in shape, and includes a first wall portion 110, a second wall portion 120, and a connecting wall portion 130. The first wall portion 110 and the second wall portion 120 are both flat cylindrical, and are arranged opposite each other along a first direction Z as shown. The connecting wall portion 130 extends from the first wall portion 110 to the second wall portion 120. The first wall portion 110, the second wall portion 120, and the connecting wall portion 130 together enclose an accommodating cavity for accommodating the electrode assembly 200, the first tab 300, and the second tab 400.

Referring specifically to FIG. 2, the electrode assembly 200 is cylindrical in shape, and includes a first electrode plate 210, a second electrode plate 220, and a separator 230. The first electrode plate 210, the second electrode plate 220, and the separator 230 are stacked and wound in a spiral shape around a central axis O. The separator 230 is disposed between the first electrode plate 210 and the second electrode plate 220 for separation. It should be noted that the electrode assembly 200 is cylindrical in shape, and the "central axis" in this application document refers to an axis of the electrode assembly 200 in the wound state; and the "first direction Z" in this application document is an extending direction of the central axis O and perpendicular to a winding direction W of the electrode assembly 200. FIG. 2 is a view from the first direction Z. In this view, the related elements of the button cell appear as planar shapes, for example, the central axis O appears as a point. The method for determining the central axis O may be: obtaining an image of the electrode assembly 200 viewed from the first direction Z, and processing the image to draw a circumscribed circle of the electrode assembly 200, where a line extending along the first direction Z from the center of the circumscribed circle is the central axis O. Next, the electrode assembly 200 is described by using an example in which the first electrode plate 210 is a cathode plate and the second electrode plate 220 is an anode plate. It can be understood that in other embodiments of this application, the first electrode plate 210 may alternatively be an anode plate, and correspondingly, the second electrode plate 220 is a cathode plate.

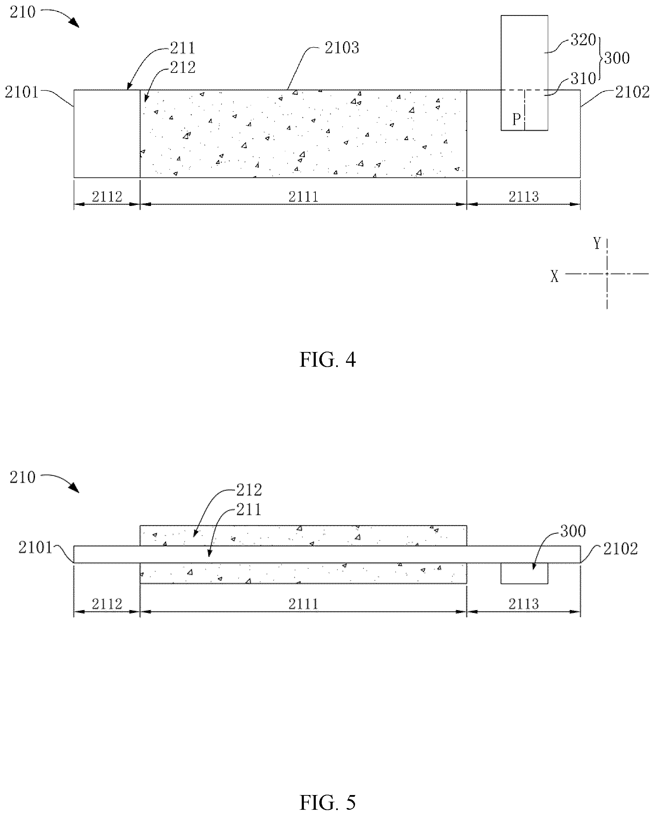

For the first electrode plate 210, refer specifically to FIG. 4 and FIG. 5, which are respectively a schematic diagram and a top view of the first electrode plate 210 in a flattened state. With reference to FIG. 1 and FIG. 2, the first electrode plate 210 includes a first current collector 211 and a first active material layer 212 applied on a surface of the first current collector 211. The first current collector 211 includes a first starting edge 2101 and a first ending edge 2102 arranged opposite to each other along a second direction X, and two first long edges 2103 arranged opposite to each other along a third direction Y. The first electrode plate 210 is wound around the first starting edge 2101, that is, the first electrode plate includes a first starting edge 2101 and a first ending edge 2102 arranged opposite to each other along the winding direction W of the electrode assembly 200 as shown in FIG. 3. When the first electrode plate 210 is in a wound state, the first long edges 2103 extend along the winding direction W, the first starting edge 2101 is an edge line of the first current collector 211 located at a center position of the first electrode plate 210, and the first ending edge 2102 is an edge line of the first current collector 211 located at an outer turn of the first electrode plate 210. When the first electrode plate 210 is in a flattened state, the first long edges 2103 extend along the second direction X. More specifically, the first current collector 211 includes a first coated film segment 2111, a first uncoated foil segment 2112, and a second uncoated foil segment 2113. From the first starting edge 2101 to the first ending edge 2102 along the winding direction W of the electrode assembly 200, the first uncoated foil segment 2112, the first coated film segment 2111, and the second uncoated foil segment 2113 are arranged in sequence. The first coated film segment 2111 is a region with the first active material layer 212 on both sides. The first uncoated foil segment 2112 and the second uncoated foil segment 2113 are regions with at least one side not coated with the first active material layer 212. The first starting edge 2101 is arranged as an edge line of the first uncoated foil segment 2112, meaning that the first uncoated foil segment 2112 is located in an inner layer region of the electrode assembly 200 in the wound state. The first ending edge 2102 is arranged as an edge line of the second uncoated foil segment 2113, meaning that the second uncoated foil segment 2113 is located in an outer layer region of the electrode assembly 200 in the wound state. It should be noted that the "winding direction W" in this application document means an extending direction of the electrode assembly 200 in the wound state from the inside to the outside. For example, when viewed along the first direction Z, the first electrode plate 210 extends from the first starting edge 2101 to the first ending edge 2102 along the winding direction W.

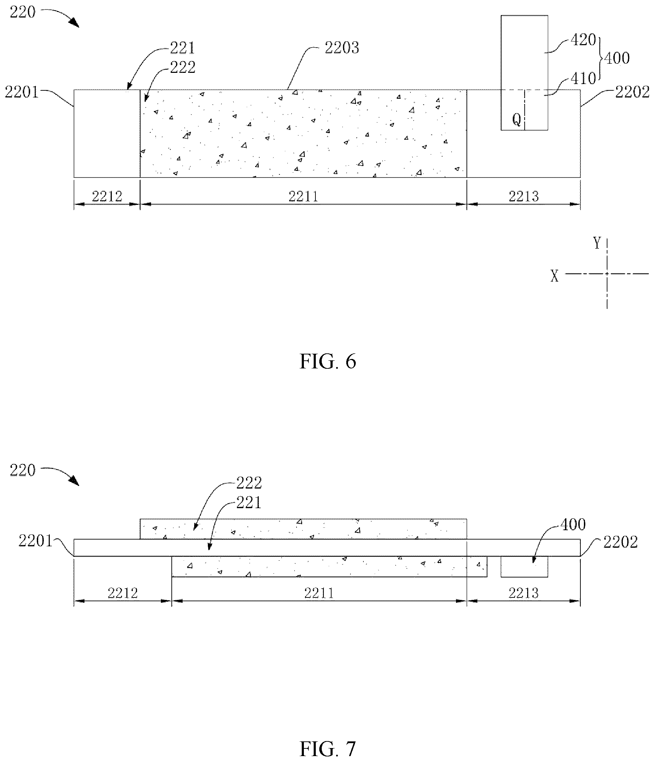

For the second electrode plate 220, refer specifically to FIG. 6 and FIG. 7, which are respectively a schematic diagram and a top view of the second electrode plate 220 in a flattened state. With reference to FIG. 1 and FIG. 2, the second electrode plate 220 includes a second current collector 221 and a second active material layer 222 applied on a surface of the second current collector 221. The second current collector 221 includes a second starting edge 2201 and a second ending edge 2202 arranged opposite to each other along the second direction X, and two second long edges 2203 arranged opposite to each other along the third direction Y. The second electrode plate 210 is wound around the second starting edge 2201, that is, the second electrode plate includes a second starting edge 2201 and a second ending edge 2202 arranged opposite to each other along the winding direction W of the electrode assembly 200 as shown in FIG. 3. When the second electrode plate 220 is in a wound state, the second long edges 2203 extend along the winding direction W, the second starting edge 2201 is an edge line of the second current collector 221 located at a center position of the second electrode plate 220, and the second ending edge 2202 is an edge line of the second current collector 221 located at an outer turn of the second electrode plate 220. When the second electrode plate 220 is in a flattened state, the second long edges 2203 extend along the second direction X. More specifically, the second current collector 221 includes a second coated film segment 2211, a third uncoated foil segment 2212, and a fourth uncoated foil segment 2213. From the second starting edge 2201 to the second ending edge 2202 along the winding direction W, the third uncoated foil segment 2212, the second coated film segment 2211, and the fourth uncoated foil segment 2213 are arranged in sequence. The second coated film segment 2211 is a region with the second active material layer 222 on both sides. The third uncoated foil segment 2212 and the fourth uncoated foil segment 2113 are regions with at least one side not coated with the second active material layer 222. The second starting edge 2201 is arranged as an edge line of the third uncoated foil segment 2212, meaning that the third uncoated foil segment 2212 is located in an inner layer region of the electrode assembly 200 in the wound state. The second ending edge 2202 is arranged as an edge line of the fourth uncoated foil segment 2213, meaning that the fourth uncoated foil segment 2213 is located in an outer layer region of the electrode assembly 200 in the wound state.

With reference to FIG. 2 and FIG. 3, the innermost turn of the electrode assembly 200 in the wound state is a part of the second electrode plate 220, that is, when viewed from the first direction Z, one end of the second electrode plate 220 located in the central region of the electrode assembly 200 extends beyond one end of the first electrode plate 210 located in the central region of the electrode assembly 200. The outermost turn of the electrode assembly 200 in the wound state is a part of the second electrode plate 220, that is, when viewed from the first direction Z, one end of the second electrode plate 220 facing away from the central region of the electrode assembly 200 extends beyond one end of the first electrode plate 210 facing away from the central region of the electrode assembly 200.

For the first tab 300, refer to FIG. 3, which is a schematic diagram after the separator 230 in FIG. 2 is hidden, where the first tab 300 is connected to the first electrode plate 210. Specifically, the first tab 300 includes a first connection segment 310 and a first extension segment 320 arranged in sequence along the first direction Z. The first connection segment 310 extends along the first direction Z and is connected to the first current collector 211. In this embodiment, the first connection segment 310 is connected to the second uncoated foil segment 2113. The first extension segment 320 is connected to the first connection segment 310 and is located outside the first current collector 211. The first connection segment 310 has a first centerline P extending along the first direction Z. When viewed along the first direction Z, the first centerline P passes through the midpoint of the first tab 300. Optionally, a thickness of the first tab 300 is 20 µm to 100 µm. Such setting can meet the current flow requirements of the button cell 1, and can also ensure a good flatness of the electrode assembly 200, that is, achieving a balance between the current flow requirement and the flatness of the electrode assembly 200.

Still referring to FIG. 3, the second tab 400 is connected to the second electrode plate 220. Specifically, the second tab 400 includes a second connection segment 410 and a second extension segment 420 arranged in sequence along the first direction Z. The second connection segment 410 extends along the first direction Z and is connected to the second current collector 221. In this embodiment, the second connection segment 410 is connected to the fourth uncoated foil segment 2213. The second extension segment 420 is connected to the second connection segment 410 and is located outside the second current collector 221. The second connection segment 410 has a second centerline Q extending along the first direction Z. When viewed along the first direction Z, the second centerline Q passes through the midpoint of the second tab 400. Optionally, a thickness of the second tab 400 is 20 µm to 100 µm. Such setting can meet the current flow requirements of the button cell 1, and can also ensure a good flatness of the electrode assembly 200, that is, achieving a balance between the current flow requirement and the flatness of the electrode assembly.

For better understanding of the electrode assembly 200, the following definitions are provided. Referring to FIG. 3, viewed from the first direction Z, a straight line passing through the central axis O and the first starting edge 2101 is defined as a first virtual line a, and a straight line passing through the central axis O and perpendicular to the first virtual line a is defined as a second virtual line b. Viewed from the first direction Z, the first virtual line a and the second virtual line b divide the electrode assembly 200 into a first region A, a second region B, a third region C, and a fourth region D that are sequentially connected from the first starting edge 2101 along the winding direction W. It should be understood that the first region A, the second region B, the third region C, and the fourth region D have no overlapping regions, and the four coordinate axes formed by the first virtual line a and the second virtual line b belong to the first region A, the second region B, the third region C, and the fourth region D, respectively. The first starting edge 2101 belongs to the first region A, the next coordinate axis starting from the first starting edge 2101 along the winding direction W belongs to the second region B, and the next coordinate axis starting from the first starting edge 2101 along an opposite direction of the winding direction W belongs to the fourth region D. Viewed from the first direction Z, a ray using the central axis O as an endpoint and passing through the first starting edge 2101 is defined as a first virtual ray a'. Viewed from the first direction Z, a ray using the central axis O as an endpoint and passing through the first centerline P is defined as a third virtual line c. Viewed from the first direction Z, a ray using the central axis O as an endpoint and passing through the second centerline Q is defined as a fourth virtual line d. Viewed from the first direction Z, a ray using the central axis O as an endpoint and passing through the second starting edge 2201 is defined as a fifth virtual line e. Viewed from the first direction Z, a ray using the central axis O as an endpoint and passing through the first ending edge 2102 is defined as a sixth virtual line f. Viewed from the first direction Z, a ray using the central axis O as an endpoint and passing through the second ending edge 2202 is defined as a seventh virtual line g.

Further, viewed from the first direction Z, a smaller included angle formed between the third virtual line c and the fourth virtual line d is α₁. When one of the two included angles formed by the third virtual line c and the fourth virtual line d is less than or equal to a straight angle, α₁ is that included angle. An included angle between the fifth virtual line e and the first virtual ray a' along the winding direction W is α₂; an included angle between the sixth virtual line f and the seventh virtual line g along the winding direction W is α₃; and a smaller included angle formed between the first virtual ray a and the sixth virtual line f is α₄. When one of the two included angles formed by the first virtual ray a and the sixth virtual line f is less than or equal to a straight angle, α₄ is that included angle. A smaller included angle formed between the fifth virtual line e and the seventh virtual line g is α₅. When one of the two included angles formed by the fifth virtual line e and the seventh virtual line g is less than or equal to a straight angle, α₅ is that included angle.

After the electrode assembly 200 is wound, the arrangement of the first tab 300 and the second tab 400 easily makes the dimensions of the electrode assembly 200 uneven in various places, which in turn causes the pressure on the surfaces of the first electrode plate 210 and the second electrode plate 220 to be inconsistent at different parts. Consequently, there may be poor interfaces between the first electrode plate 210 and the second electrode plate 220, which affects the cycle life of the button cell 1. Therefore, there should be a proper distance between the first tab 300 and the second tab 400 to reduce the risk of the two being too close and leading to excessive local deformation of the electrode assembly 200. The third virtual line c and the fourth virtual line d are not simultaneously located in one of the first region, the second region, the third region, and the fourth region, so that there is a relatively large distance between the first tab 300 and the second tab 400. Next, the effect of the relative position relationship between the first tab 300 and the second tab 400 on the capacity retention rate of the button cell 1 after 500 cycles is explained in combination with experimental data. For better understanding of the experiment, the following explains the technical terms used in the experiment. The "included angle between cathode and anode tabs" described in this application document means an included angle between the first tab 300 and the second tab 400 when viewed along the first direction, that is, a smaller included angle between the third virtual line c and the fourth virtual line d, denoted as α₁.

The "included angle between the starting positions of the cathode and anode plates" described in this application document means an included angle formed by the staggered portions of the first electrode plate 210 and the second electrode plate 220 at the head and the central axis O when viewed along the first direction, that is, the included angle of the fifth virtual line e rotating along the winding direction W to the first virtual ray a', denoted as α₂.

The "included angle between the head and tail of the cathode" described in this application document means an included angle formed jointly by the first starting edge 2101, the central axis O, and the first ending edge 2102 of the first electrode plate 210 when viewed along the first direction Z, that is, a smaller included angle formed between the first virtual ray a and the sixth virtual line f, denoted as α₄.

The "included angle between the head and tail of the anode" described in this application document means an included angle formed jointly by the second starting edge 2201, the central axis O, and the second ending edge 2202 of the second electrode plate 220 when viewed along the first direction Z, that is, a smaller included angle formed between the fifth virtual line e and the seventh virtual line g, denoted as α₅.

After a button cell is manufactured, the cell is charged at a constant current of 0.5C to 4.45 V at 25°C, left standing for 30 minutes, and then discharged at 0.5C to 3.0 V. After 500 such charge-discharge cycles, the capacity of the fully discharged cell is C₂. The battery capacity at the first full discharge after manufacturing is C₁. The "capacity retention rate after 500 cycles" described in this application document means a percentage of the battery capacity C₂ to the battery capacity C₁. For example, if the capacity of the button cell 1 at the first full discharge is 5000 milliampere-hours (mAh), and the capacity of the button cell 1 fully discharged after 500 charge-discharge cycles is 4000 mAh, the "capacity retention rate after 500 cycles" of the button cell 1 is 80%.

Specifically, the following describes the preparation of the button cell of the comparative example and examples.

### Comparative example 1

### (1) Preparation of positive electrode plate

Lithium cobalt oxide, polyvinylidene fluoride, and conductive carbon black (SP) were added into N-methylpyrrolidone (NMP) at a weight ratio of 97:1.5:1.5 and fully stirred and mixed to produce a uniform positive electrode slurry. The positive electrode slurry was applied on both surfaces of a positive current collector (aluminum foil, with a thickness of 12 µm and a width of 4.0 mm) to form a uniform coating. After drying and cold pressing, the coating thickness was 50 µm on a single side. Then a conductive plate was welded to the positive electrode plate to obtain a positive electrode plate.

### (2) Preparation of negative electrode plate

Graphite material, styrene-butadiene rubber (SBR), and sodium carboxymethyl cellulose (CMC) were added into deionized water at a weight ratio of 97.4:1.2:1.4 and fully stirred an mixed to produce a uniform negative electrode slurry. The negative electrode slurry was applied to a negative current collector (copper foil, with a thickness of 10 µm and a width of 4.5 mm) pre-coated with a primer layer. After drying and cold pressing, the coating thickness was 60 µm on a single side. Thus, a negative electrode plate was obtained. The primer layer was formed by mixing SP, CMC, and SBR at a mass ratio of 60:5:35 and then applying the obtained slurry to two surfaces of the current collector in the gravure coating method. Then a conductive plate was welded to the negative electrode plate to obtain a negative electrode plate.

### (3) Preparation of separator

The substrate layer of a single-layer film made of polyethylene (PE) was selected as a separator. The separator had a thickness of 16 µm.

### (3) Preparation of button cell

The prepared positive electrode plate, separator, and negative electrode plate were stacked in sequence, so that the separator was sandwiched between the positive electrode plate and the negative electrode plate for separation. Then the resulting stack was wound to obtain an electrode assembly. The electrode assembly was placed into the first housing, the second housing was fitted onto the top of the first housing, and moisture removal was performed at 80°C. The prepared electrolyte (composition of the electrolyte: ethylene carbonate (EC):propylene carbonate (PC):diethyl carbonate (DEC) = 1:1:1, and the concentration of LiPF₆ was 1.15 mol/L) was injected. After processes such as packaging, standing, and formation were performed, a button cell was obtained. The included angle α₁ between the cathode and anode tabs was 80°; the included angle α₂ between the starting positions of the heads of the cathode and anode plates was 120°; the included angle α₄ between the head and tail of the cathode was 20°; and the included angle α₅ between the head and tail of the anode was 20°.

### Example 1

The button cell provided in Example 1 is substantially the same as that in Comparative example 1. The main difference from the button cell provided in Comparative example 1 is: in the button cell of Example 1, the included angle α₁ between the cathode and anode tabs is 90°.

### Example 2

The button cell provided in Example 2 is substantially the same as that in Comparative example 1. The main difference from the button cell provided in Comparative example 1 is: in the button cell of Example 2, the included angle α₁ between the cathode and anode tabs is 100°.

### Example 3

The button cell provided in Example 3 is substantially the same as that in Comparative example 1. The main difference from the button cell provided in Comparative example 1 is: in the button cell of Example 3, the included angle α₁ between the cathode and anode tabs is 110°.

### Example 4

The button cell provided in Example 4 is substantially the same as that in Comparative example 1. The main difference from the button cell provided in Comparative example 1 is: in the button cell of Example 4, the included angle α₁ between the cathode and anode tabs is 120°.

### Example 5

The button cell provided in Example 5 is substantially the same as that in Comparative example 1. The main difference from the button cell provided in Comparative example 1 is: in the button cell of Example 5, the included angle α₁ between the cathode and anode tabs is 130°.

### Example 6

The button cell provided in Example 6 is substantially the same as that in Comparative example 1. The main difference from the button cell provided in Comparative example 1 is: in the button cell of Example 6, the included angle α₁ between the cathode and anode tabs is 150°.

### Example 7

The button cell provided in Example 7 is substantially the same as that in Comparative example 1. The main difference from the button cell provided in Comparative example 1 is: in the button cell of Example 7, the included angle α₁ between the cathode and anode tabs is 180°.

Table 1 shows the relationship between the relative position relationship between the first tab 300 and the second tab 400 and the capacity retention rate of the button cell 1 after 500 cycles. As can be seen from Table 1, when the included angle α₁ between the first tab 300 and the second tab 400 is <90°, the capacity retention rate of the button cell 1 after 500 cycles is significantly lower than 90%; and when 90≤α₁≤180°, the capacity retention rate of the button cell 1 after 500 cycles is close to or higher than 90%, and its service life is longer. In addition, it is worth noting that the setting of 90≤α₁≤180° allows for a relatively large distance between the first tab 300 and the second tab 400, which can also reduce the current noise phenomenon caused by the first tab 300 and the second tab 400 being too close to each other.

**Table 1 Relationship between the relative position relationship between the first tab and the second tab and the capacity retention rate of the button cell after 500 cycles**

| | Included angle between cathode and anode tabs α₁ (°) | Included angle between starting positions of heads of cathode and anode electrode plates α₂ (°) | Included angle between head and tail of cathode α₄ (°) | Included angle between head and tail of anode α₅ (°) | Capacity retention rate after 500 cycles |
|---|---|---|---|---|---|
| Comparative example 1 | 80 | 120 | 20 | 20 | 79% |
| Example 1 | 90 | 120 | 20 | 20 | 89% |
| Example 2 | 100 | 120 | 20 | 20 | 90% |
| Example 3 | 110 | 120 | 20 | 20 | 90% |
| Example 4 | 120 | 120 | 20 | 20 | 90% |
| Example 5 | 130 | 120 | 20 | 20 | 91% |
| Example 6 | 150 | 120 | 20 | 20 | 91% |
| Example 7 | 180 | 120 | 20 | 20 | 90% |

In some embodiments, viewed from the first direction Z, both the first connection segment 310 and the second connection segment 410 are spaced from the first virtual ray a'. If the first connection segment 310 and the second connection segment 410 both intersect with the first virtual ray a', the arrangement of the first tab 300 and the second tab 400 causes compressive stress on the electrode assembly 200 at this position, and this force is transmitted along a radial direction of the electrode assembly 200 to the head of the first electrode plate 210, which in turn causes the first active material layer 212 near the first starting edge 2101 to fall off. The arrangement that neither the first connection segment 310 nor the second connection segment 410 intersect with the first virtual ray a' can better reduce the above risk. In this embodiment, the third virtual line c is located in the fourth region D, the fourth virtual line d is located in the second region B. This arrangement makes the first tab 300 roughly located in the fourth region D, and the second tab 400 roughly located in the second region B, with a relatively large distance between the two. Certainly, in other embodiments of this application, the specific positions of the third virtual line c and the fourth virtual line d can be adaptively changed on the above basis, and are not specifically limited in this application. It can also be understood that in other embodiments of this application, only one of the first connection segment 310 or the second connection segment 410 may be spaced from the first virtual ray a'. As long as at least one of the first connection segment 310 or the second connection segment 410 is spaced from the first virtual ray a', the above risk can be reduced to some extent.

In some embodiments, 90°≤α₂≤180°. Specifically, in the manufacturing process of the electrode assembly 200, the first electrode plate 210, the second electrode plate 220, and the separator 230 are stacked in the above stacking manner, and one end of the stacked electrode assembly 200 is wound around a winding mandrel, and then the winding mandrel is rotated to wind the electrode assembly 200 into a spiral shape. If the heads of the first electrode plate 210 and the second electrode plate 220 are flush, or the staggered distance between them is small, it is difficult to wind the electrode assembly 200. In addition, due to the presence of the third uncoated foil segment 2212, if the heads of the first electrode plate 210 and the second electrode plate 220 are flush, or if the staggered distance between them is small, the end of the second coated film segment 2211 close to the third uncoated foil segment 2212 may not extend beyond the end of the first coated film segment 2111 close to the first uncoated foil segment 2112, which may cause lithium precipitation, and further lead to a low capacity retention rate of the button cell 1 after 500 cycles.

Specifically, the preparation of the button cell provided in Examples 8-13 is described below.

### Example 8

The button cell provided in Example 8 is substantially the same as that in Comparative example 1. The main difference from the button cell provided in Comparative example 1 is: in the button cell of Example 8, the included angle α₁ between the cathode and anode tabs is 130°; and the included angle α₂ between the starting positions of the heads of the anode and cathode electrode plates is 80°.

### Example 9

The button cell provided in Example 9 is substantially the same as that in Example 8. The main difference from the button cell provided in Example 8 is: in the button cell of Example 9, the included angle α₂ between the starting positions of cathode and anode plates is 90°.

### Example 10

The button cell provided in Example 10 is substantially the same as that in Example 8. The main difference from the button cell provided in Example 8 is: in the button cell of Example 10, the included angle α₂ between the starting positions of cathode and anode plates is 100°.

### Example 11

The button cell provided in Example 11 is substantially the same as that in Example 8. The main difference from the button cell provided in Example 8 is: in the button cell of Example 11, the included angle α₂ between the starting positions of cathode and anode plates is 140°.

### Example 12

The button cell provided in Example 12 is substantially the same as that in Example 8. The main difference from the button cell provided in Example 8 is: in the button cell of Example 12, the included angle α₂ between the starting positions of cathode and anode plates is 160°.

### Example 13

The button cell provided in Example 13 is substantially the same as that in Example 8. The main difference from the button cell provided in Example 8 is: in the button cell of Example 13, the included angle α₂ between the starting positions of cathode and anode plates is 180°.

Table 2 shows a relationship between the included angle α₂ and the capacity retention rate of the button cell 1 after 500 cycles. As can be seen from Table 2, in the case of α₂<90°, it is difficult to wind the electrode assembly 200 using a winding mandrel, there is slight lithium precipitation at the head of the second electrode plate 220, and the cycling capacity retention rate of the button cell 1 after 500 cycles is lower than 90%. In the case of 90°≤α₂≤180°, it is easy to wind the electrode assembly 200 using a winding mandrel, there is no lithium precipitation at the head of the second electrode plate 220, and the cycling capacity retention rate of the button cell 1 after 500 cycles is close to or higher than 90%.

**Table 2 Relationship between the included angle α2 and the capacity retention rate of the button cell after 500 cycles**

| | Included angle between cathode and anode tabs α₁ (°) | Included angle between starting positions of heads of cathode and anode electrode plates α₂ (°) | Included angle between head and tail of cathode α₄ (°) | Included angle between head and tail of anode α₅ (°) | Capacity retention rate after 500 cycles | Difficulty of winding | Lithium precipitation at negative electrode head |
|---|---|---|---|---|---|---|---|
| Example 8 | 130 | 80 | 20 | 20 | 85% | Difficult to wind on the mandrel | Slight lithium precipitation |
| Example 9 | 130 | 90 | 20 | 20 | 91% | Quite easy to wind on the mandrel | No lithium precipitation |
| Example 10 | 130 | 100 | 20 | 20 | 90% | Quite easy to wind on the mandrel | No lithium precipitation |
| Example 5 | 130 | 120 | 20 | 20 | 91% | Quite easy to wind on the mandrel | No lithium precipitation |
| Example 11 | 130 | 140 | 20 | 20 | 90% | Easy to wind on the mandrel | No lithium precipitation |
| Example 12 | 130 | 160 | 20 | 20 | 89% | Easy to wind on the mandrel | No lithium precipitation |
| Example 13 | 130 | 180 | 20 | 20 | 88% | Easy to wind on the mandrel | No lithium precipitation |

In some embodiments, the first connection segment 310 and the second connection segment 410 are both spaced from the fifth virtual line e. If the first connection segment 310 and the second connection segment 410 both intersect with the fifth virtual line e, the arrangement of the first tab 300 and the second tab 400 causes compressive stress on the electrode assembly 200 at this position, and this force is transmitted along a radial direction of the electrode assembly 200 to the head of the second electrode plate 220, which in turn causes the second active material layer 222 near the second starting edge 2201 to fall off. The arrangement that neither the first connection segment 310 nor the second connection segment 410 intersect with the fifth virtual line e can better reduce the above risk. It can be understood that in other embodiments of this application, only one of the first connection segment 310 or the second connection segment 410 may be spaced from the fifth virtual line e. As long as at least one of the first connection segment 310 or the second connection segment 410 is spaced from the fifth virtual line e, the above risk can be reduced to some extent.

It is worth noting that along the winding direction W, one end of the second electrode plate 220 having the second ending edge 2202 extends beyond the first ending edge 2102, so that the first ending edge 2102 is covered by and indirectly pressed and fixed by the second electrode plate 220. The button cell 1 further includes a fixing adhesive 240. The fixing adhesive 240 is fixed to an outer surface of the electrode assembly 200 and is located at the second ending edge 2202 to fix the second ending edge 2202.

In some embodiments, 90°≤α₃≤180°. This arrangement aims to ensure a proper distance between the second ending edge 2202 and the first ending edge 2102. If the distance is small, that is, the tail ends of the first electrode plate 210 and the second electrode plate 220 are stacked together, due to the relatively large thickness at this position, it is difficult for the adhesive 240 to fix the second ending edge 2202. Moreover, during operation, the electrode assembly 200 is prone to swell due to heat. Therefore, the simultaneous swelling of the tail ends of the first electrode plate 210 and the second electrode plate 220 can easily cause the fixing effect of the adhesive 240 to attenuate or even fail. The setting of 90°≤α₃≤180° can ensure an appropriate distance between the tail ends of the first electrode plate 210 and the second electrode plate 220, thus overcoming the shortcomings mentioned above. For example, in this embodiment, the first ending edge 2102 is located in the first region A, and the second ending edge 2202 is located in the third region, that is, the sixth virtual line f is located in the first region A, and the seventh virtual line g is located in the third region C.

In some embodiments, 0°≤α₄≤30°. This setting aims to ensure that the first electrode plate 210 is wound approximately in an integer number of turns, thus improving the uniformity of the thickness of the electrode assembly in various places to some extent. Specifically, the preparation of the button cell provided in Examples 14 to 17 is described below.

### Example 14

The button cell provided in Example 14 is substantially the same as that in Comparative example 1. The main difference from the button cell provided in Comparative example 1 is: in the button cell of Example 14, the included angle α₁ between the cathode and anode tabs is 130°; and the included angle α₄ between the head and tail of the cathode is 40°.

### Example 15

The button cell provided in Example 15 is substantially the same as that in Example 14. The main difference from the button cell 1 provided in Example 14 is: in the button cell of Example 15, the included angle α₄ between the head and tail of the cathode is 0°.

### Example 16

The button cell provided in Example 16 is substantially the same as that in Example 14. The main difference from the button cell provided in Example 14 is: in the button cell of Example 16, the included angle α₄ between the head and tail of the cathode is 10°.

### Example 17

The button cell provided in Example 17 is substantially the same as that in Example 14. The main difference from the button cell provided in Example 14 is: in the button cell 1 of Example 17, the included angle α₄ between the head and tail of the cathode is 30°.

Table 3 shows a relationship between the included angle between the head and tail of the first electrode plate 210 and the capacity retention rate of the button cell 1 after 500 cycles. As can be seen from Table 3, in the case of α₄>30°, the capacity retention rate of the button cell 1 after 500 cycles is below 85%. In the case of 0°≤α₄≤30°, the capacity retention rate of the button cell 1 after 500 cycles is close to or higher than 90%, showing a significant improvement.

**Table 3 Relationship between the included angle between the head and tail of the first electrode plate and the capacity retention rate of the button cell after 500 cycles**

| | Included angle between cathode and anode tabs α₁ (°) | Included angle between starting positions of heads of cathode and anode electrode plates α₂ (°) | Included angle between head and tail of cathode α₄ (°) | Included angle between head and tail of anode α₅ (°) | Capacity retention rate after 500 cycles |
|---|---|---|---|---|---|
| Comparative example 14 | 130 | 120 | 40 | 20 | 84% |
| Example 15 | 130 | 120 | 0 | 20 | 89% |
| Example 16 | 130 | 120 | 10 | 20 | 90% |
| Example 5 | 130 | 120 | 20 | 20 | 91% |
| Example 17 | 130 | 120 | 30 | 20 | 90% |

In some embodiments, 0°≤α₅≤30°. This arrangement aims to ensure that the second electrode plate 220 is wound in a generally whole number of turns, thereby improving the uniformity of the thickness of the electrode assembly 200 in various places to a certain extent. Specifically, the preparation of the button cell provided in Examples 18 to 21 is described below.

### Example 18

The button cell provided in Example 18 is substantially the same as that in Comparative example 1. The main difference from the button cell provided in Comparative example 1 is: in the button cell 1 of Example 18, the included angle α₁ between the cathode and anode tabs is 130°; and the included angle α₅ between the head and tail of the anode is 40°.

### Example 19

The button cell provided in Example 19 is substantially the same as that in Example 18. The main difference from the button cell provided in Example 18 is: in the button cell of Example 19, the included angle α₅ between the head and tail of the anode is 0°.

### Example 20

The button cell provided in Example 20 is substantially the same as that in Example 18. The main difference from the button cell provided in Example 18 is: in the button cell of Example 20, the included angle α₅ between the head and tail of the anode is 10°.

### Example 21

The button cell provided in Example 21 is substantially the same as that in Example 18. The main difference from the button cell provided in Example 18 is: in the button cell of Example 21, the included angle α₅ between the head and tail of the anode is 30°.

Table 4 shows a relationship between the included angle between the head and tail of the second electrode plate 220 and the capacity retention rate of the button cell 1 after 500 cycles. As can be seen from Table 4, in the case of α₅>30°, the capacity retention rate of the button cell 1 after 500 cycles is below 85%. In the case of 0°≤α₅≤30°, the capacity retention rate of the button cell 1 after 500 cycles is close to or higher than 90%, showing a significant improvement.

**Table 4 Relationship between the included angle between the head and tail of the second electrode plate and the capacity retention rate of the button cell after 500 cycles**

| | Included angle between cathode and anode tabs α₁ (°) | Included angle between starting positions of heads of cathode and anode electrode plates α₂ (°) | Included angle between head and tail of cathode α₄ (°) | Included angle between head and tail of anode α₅ (°) | Capacity retention rate after 500 cycles |
|---|---|---|---|---|---|
| Example 18 | 130 | 120 | 20 | 40 | 82% |
| Example 19 | 130 | 120 | 20 | 0 | 88% |
| Example 20 | 130 | 120 | 20 | 10 | 89% |
| Example 5 | 130 | 120 | 20 | 20 | 91% |
| Example 21 | 130 | 120 | 20 | 30 | 90% |

In some embodiments, one of the first tab 300 and the second tab 400 is located in the fifth region; where the fifth region is a region between the fifth virtual line and the first virtual ray, and along the winding direction W, the fifth virtual line, the fifth region, and the first virtual ray are arranged in sequence. The first electrode plate 210 includes multiple first arcuate portions 213 located in the fifth region, and the first arcuate portions 213 are arranged in sequence from inside to outside. The second electrode plate 220 includes multiple second arcuate portions 223 located in the fifth region, and the second arcuate portions 223 are arranged in sequence from inside to outside. Since there is no first arcuate portion 213 between the two innermost second arcuate portions 223, arranging the first tab 300 or the second tab 400 in the fifth region helps to balance the overall thickness of the electrode assembly 200.

In some embodiments, one of the first tab 300 and the second tab 400 is located in the sixth region; where the sixth region is a region between the sixth virtual line f and the seventh virtual line g, and along the winding direction W, the sixth virtual line f, the sixth region, and the seventh virtual line g are arranged in sequence. The first electrode plate 210 includes multiple third arcuate portions 214 located in the sixth region, and the third arcuate portions 214 are arranged in sequence from inside to outside. The second electrode plate 220 includes multiple fourth arcuate portions 224 located in the sixth region, and the fourth arcuate portions 224 are arranged in sequence from inside to outside. Since there is no third arcuate portion 214 between the two outermost fourth arcuate portions 224, arranging the first tab 300 or the second tab 400 in the sixth region helps to balance the overall thickness of the electrode assembly 200.

In summary, the button cell 1 provided in the embodiments of this application includes an electrode assembly 200, a first tab 300, and a second tab 400. The electrode assembly 200 includes a first electrode plate 210 and a second electrode plate 220, and the first electrode plate 210 and the second electrode plate 220 are stacked and wound in a spiral shape around a central axis. The first electrode plate 210 includes a first current collector 211, and the first current collector 211 includes a first starting edge 2101 and a first ending edge 2102 arranged opposite to each other in the winding direction W. The second electrode plate 220 includes a second current collector. Viewed from the first direction Z, the first virtual line a and the second virtual line b divide the electrode assembly 200 into a first region A, a second region B, a third region C, and a fourth region D that are sequentially connected from the first starting edge along the winding direction W.

The first tab 300 includes a first connection segment 310 extending along the first direction Z and connected to the first current collector 211, and the first connection segment 310 has a first centerline P extending along the first direction Z. The second tab 400 includes a second connection segment 410 extending along the first direction Z and connected to the second current collector 221, and the second connection segment 410 has a second centerline Q extending along the first direction Z. Viewed from the first direction Z, the third virtual line c starts from the central axis O and passes through the first centerline P, and the fourth virtual line d starts from the central axis O and passes through the second centerline Q. The third virtual line c and the fourth virtual line d are not simultaneously located in the same one of the first region A, the second region B, the third region C, and the fourth region D, and a smaller included angle formed between the third virtual line c and the fourth virtual line d is α₁, where 90°≤α₁≤180°.

In the case of 90°≤α₁≤180°, there is a proper distance between the first tab 300 and the second tab 400, which can alleviate the uneven thickness of the electrode assembly connected to the first tab and the second tab to some extent. The capacity retention rate of the button cell 1 after 500 cycles is close to or higher than 90%, and its service life is longer. That is, the button cell 1 provided in the embodiments of this application can alleviate the current situation that the capacity retention rate after 500 cycles is relatively low.

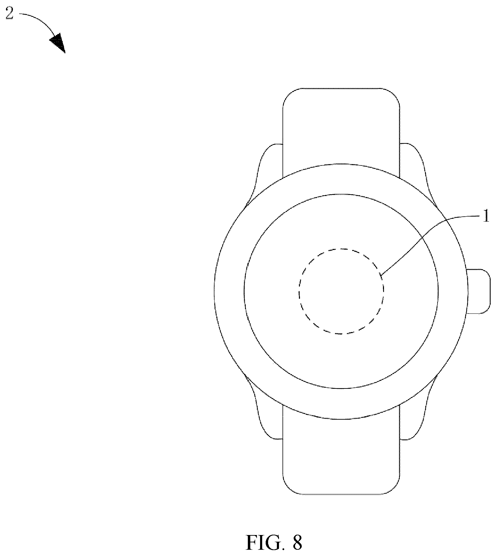

Based on the same inventive concept, this application further provides an electronic device 2. FIG. 8 is a schematic diagram of an electronic device 2. The electronic device 2 includes the button cell 1 according to the above embodiments and a load driven by the button cell 1. In this embodiment, the electronic device 2 is a watch. It can be understood that in other embodiments of this application, the electronic device 2 can alternatively be any other electronic device such as an anti-theft device, an access control device, a computer, or a wristband.

Since the electronic device 2 includes the foregoing button cell 1, the electronic device 2 can also alleviate the current situation that the capacity retention rate of the button cell after 500 cycles is relatively low.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1. A button cell, comprising an electrode assembly, a first tab, and a second tab; wherein,
the electrode assembly comprises a first electrode plate and a second electrode plate, the first electrode plate and the second electrode plate are stacked and wound in a spiral shape around a central axis, an extending direction of the central axis is a first direction, and the first direction is perpendicular to a winding direction; the first electrode plate comprises a first current collector, and the first current collector comprises a first starting edge and a first ending edge arranged opposite to each other in the winding direction; the second electrode plate comprises a second current collector;
viewed from the first direction, a line passing through the first starting edge and the central axis is defined as a first virtual line, and a line passing through the central axis and perpendicular to the first virtual line is defined as a second virtual line, and the first virtual line and the second virtual line divide the electrode assembly into a first region, a second region, a third region, and a fourth region that start from the first starting edge and are sequentially connected along the winding direction; and
the first tab comprises a first connection segment extending along the first direction and connected to the first current collector, and the first connection segment has a first centerline extending along the first direction; the second tab comprises a second connection segment extending along the first direction and connected to the second current collector, and the second connection segment has a second centerline extending along the first direction; viewed from the first direction, a line connecting the first centerline and the central axis is defined as a third virtual line, and a line connecting the second centerline and the central axis is defined as a fourth virtual line; and the third virtual line and the fourth virtual line are not simultaneously located in the same one of the first region, the second region, the third region, and the fourth region, and a smaller included angle formed between the third virtual line and the fourth virtual line is α₁, wherein 90°≤α₁≤180°.

2. The button cell according to claim 1, wherein, viewed from the first direction, a ray using the central axis as an endpoint and passing through the first starting edge is defined as a first virtual ray, and at least one of the first connection segment or the second connection segment is spaced from the first virtual ray.

3. The button cell according to claim 1, wherein, the third virtual line is located in the fourth region, and the fourth virtual line is located in the second region.

4. The button cell according to claim 1, wherein, the first electrode plate is a cathode electrode plate, and the second electrode plate is an anode electrode plate.

5. The button cell according to claim 1, wherein, the second current collector comprises a second starting edge and a second ending edge arranged opposite to each other in the winding direction; and
viewed from the first direction, a ray using the central axis as an endpoint and passing through the first starting edge is defined as a first virtual ray, a ray using the central axis as an endpoint and passing through the second starting edge is defined as a fifth virtual line, and an included angle between the fifth virtual line and the first virtual ray along the winding direction is α₂, wherein 90°≤α₂≤180°.

6. The button cell according to claim 5, wherein, one of the first tab and the second tab is disposed in a fifth region;
wherein the fifth region is a region between the fifth virtual line and the first virtual ray, and along the winding direction, the fifth virtual line, the fifth region, and the first virtual ray are arranged in sequence.

7. The button cell according to claim 1, wherein, the second current collector comprises a second starting edge and a second ending edge arranged opposite to each other in the winding direction; and
viewed from the first direction, a ray using the central axis as an endpoint and passing through the first ending edge is defined as a sixth virtual line, a ray using the central axis as an endpoint and passing through the second ending edge is defined as a seventh virtual line, and an included angle between the sixth virtual line and the seventh virtual line along the winding direction is α₃, wherein 90°≤α₃≤180°.

8. The button cell according to claim 7, wherein, one of the first tab and the second tab is disposed in a sixth region;
wherein the sixth region is a region between the sixth virtual line and the seventh virtual line, and along the winding direction, the sixth virtual line, the sixth region, and the seventh virtual line are arranged in sequence.

9. The button cell according to claim 7, wherein, the sixth virtual line is located in the first region, and the seventh virtual line is located in the third region.

10. The button cell according to claim 1, wherein, the second current collector comprises a second starting edge and a second ending edge arranged opposite to each other in the winding direction; and
viewed from the first direction, a ray using the central axis as an endpoint and passing through the second starting edge is defined as a fifth virtual line, and at least one of the first connection segment or the second connection segment is spaced from the fifth virtual line.

11. The button cell according to claim 1, wherein, viewed from the first direction, a ray using the central axis as an endpoint and passing through the first starting edge is defined as a first virtual ray, a ray using the central axis as an endpoint and passing through the first ending edge is defined as a sixth virtual line, and a smaller included angle formed between the sixth virtual line and the first virtual ray is α₄, wherein 0°≤α₄≤30°.

12. The button cell according to claim 11, wherein, the first ending edge is located in the first region.

13. The button cell according to claim 1, wherein, the second current collector comprises a second starting edge and a second ending edge arranged opposite to each other in the winding direction; and
viewed from the first direction, a line connecting the second starting edge and the central axis is defined as a fifth virtual line, a line connecting the second ending edge and the central axis is defined as a seventh virtual line, and a smaller included angle formed between the fifth virtual line and the seventh virtual line is α₅, wherein 0°≤α₅≤30°.

14. The button cell according to claim 1, wherein, the first current collector comprises a first uncoated foil segment and a second uncoated foil segment, the first starting edge is configured as an edge of the first uncoated foil segment, the first ending edge is configured as an edge of the second uncoated foil segment, and the first connection segment is connected to the second uncoated foil segment.

15. The button cell according to claim 1, wherein, the second current collector comprises a second starting edge and a second ending edge arranged opposite to each other in the winding direction, the second current collector comprises a third uncoated foil segment and a fourth uncoated foil segment, the second starting edge is configured as an edge of the third uncoated foil segment, the second ending edge is configured as an edge of the fourth uncoated foil segment, and the second connection segment is connected to the fourth uncoated foil segment.

16. The button cell according to claim 1, wherein, a thickness of the first tab is 20 µm to 100 µm, and a thickness of the second tab is 20 µm to 100 µm.

17. The button cell according to claim 1, wherein, the electrode assembly comprises a separator separating the first electrode plate and the second electrode plate.

18. An electronic device, comprising the button cell according to any one of claims 1 to 17.
